# EUROPÄISCHE PATENTSCHRIFT

(11) **EP 0 693 742 B1**
(45) Veröffentlichungstag und Bekanntmachung des Hinweises auf die Patenterteilung: **08.01.2003**
(21) Anmeldenummer: 95110870.3
(22) Anmeldetag: 12.07.1995
(51) Int. Cl.: G07F 19/00, G07B 15/00, G07F 7/08

(54) **Verfahren und Geräteanordnung für einen gesicherten, anonymen Zahlungsverkehr**
Method and assembly for a secure, anonymous funds transfer
Méthode et installation pour un transfert de fonds sécurisé et anonyme

(30) Priorität: 18.07.1994 DE 4425271
(43) Veröffentlichungstag der Anmeldung: 24.01.1996
(73) Patentinhaber: ALCATEL, 75008 Paris (FR)
(72) Erfinder: Ehlert, Erhart, D-71063 Sindelfingen (DE); Beier, Wolfgang, D-71263 Weil der Stadt (DE)
(74) Vertreter: Brose, Gerhard, Dipl.-Ing.

(56) Entgegenhaltungen:
- EP-A- 0 264 023
- EP-A- 0 577 328
- WO-A-93/20539
- GB-A- 2 151 061
- PATENT ABSTRACTS OF JAPAN vol. 014, no. 249 (P-1053), 28.Mai 1990 & JP-A-02 064797 (HITACHI LTD;OTHERS: 01), 5.März 1990,

## Beschreibung

Die Erfindung betrifft ein Verfahren für einen gesicherten, anonymen Zahlungsverkehr nach dem Oberbegriff von Anspruch 1 und eine dafür geeignete Geräteanordnung nach dem Oberbegriff von Anspruch.

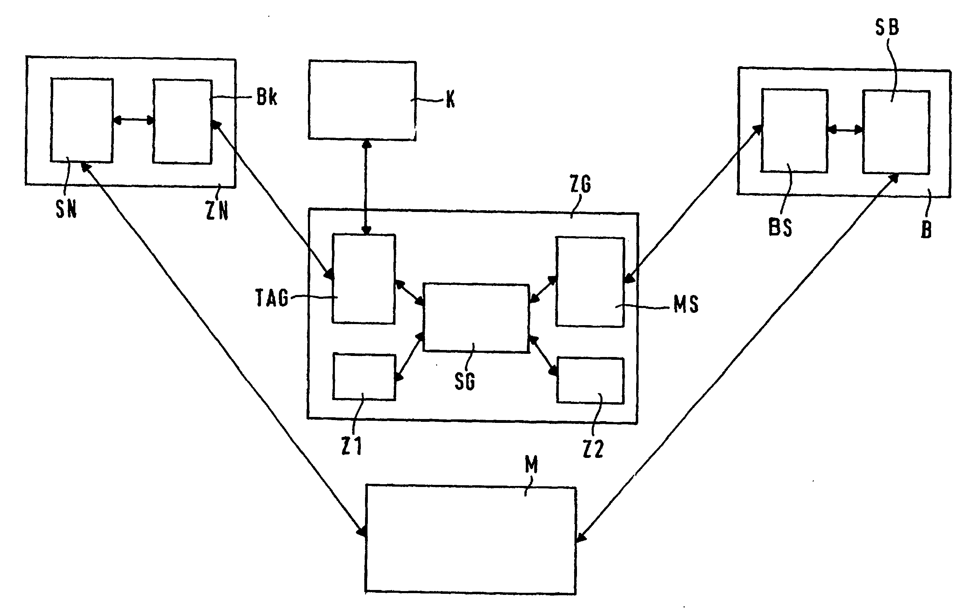

Die Broschüre "Mobilität gewinnen durch Verkehrsmanagement" der Alcatel SEL beschäftigt sich, wie der Titel zeigt, mit verschiedenen Fragen des Verkehrsmanagements. Im Bild 7 werden verschiedene Gebührenerfassungssysteme miteinander verglichen, darunter unter "Postpaid" ein als "verfahrens-anonym" bezeichnetes System, das durch eine Bürgschaftsübernahme gekennzeichnet ist. Nähere Einzelheiten sind dieser Broschüre nicht entnehmbar.

Der vorliegenden Erfindung liegt die Aufgabe zugrunde, den aufgezeigten Zahlungsverkehr automatisierbar auszugestalten.

Die Erfindung wird gelöst durch ein Verfahren nach der Lehre des Anspruchs 1 und eine Geräteanordnung nach der Lehre des Anspruchs 5.

Der Zahlungsgeber zahlt dabei mit einer vom Bürgen ausgestellten elektronischen Bürgschaft. Der Zahlungsnehmer löst diese elektronische Bürgschaft beim Bürgen ein. Der Bürge erneuert die Bürgschaft nur gegen Erstattung des aufgewendeten Betrags.

Eine für den in der o.g. Broschüre genannten Zweck des Verkehrsmanagements besonders vorteilhafte Ausgestaltung der Erfindung betrifft die Bezahlung von Straßenbenutzungsgebühren oder Parkgebühren über ein Plaketten-Bake-System. Das Auffüllen des beim Bürgen geführten Plakettenkontos erfolgt durch Datenaustausch über Mobilfunk. Die Abrechnung kann dann über das Mobilfunkkonto erfolgen.

Dieses Verfahren hat den Vorteil, daß der Zahlungsgeber gegenüber dem Zahlungsnehmer anonym bleibt und der Bürge nichts über den Zweck der Zahlung erfährt.

Im folgenden wird die Erfindung anhand eines Ausführungsbeispiels unter Zuhilfenahme der beiliegenden Zeichnung weiter erläutert.

Die einzige Figur der Zeichnung zeigt die Geräteanordnungen eines Zahlungsgebers ZG, eines Zahlungsnehmers ZN, eines Bürgen B, eines Kontrolleurs K und eines Mittelsmanns M.

Die Geräteanordnung des Zahlungsgebers ZG weist ein Steuerteil SG, eine Plakette TAG, ein Mobiltelefon MS und zwei Zusatzeinrichtungen Z1 und Z2 auf.

Die Geräteanordnung des Zahlungsnehmers ZN weist eine Bake Bk und ein Steuerteil SN auf.

Die Geräteanordnung des Bürgen B weist ein Steuerteil SB und einen Anschluß an das Fernmeldenetz, hier als Mobilfunk-Basisstation BS bezeichnet, auf.

Die Geräteanordnungen des Kontrolleurs K und des Mittelmanns M sind in der Zeichnung nicht näher spezifiziert.

Das Steuerteil SG des Zahlungsgebers ZG steht mit den übrigen Teilen seiner Geräteanordnung in Verbindung. Die Plakette TAG kann mit der Bake Bk des Zahlungsnehmers ZN und mit der Geräteanordnung des Kontrolleurs K in Verbindung treten. Das Mobiltelefon MS kann eine Datenverbindung zur Basisstation BS aufnehmen.

Das Steuerteil SN des Zahlungsnehmers ZN steht in Verbindung zur Bake Bk und kann Verbindung zur Geräteanordung des Mittelsmanns M aufnehmen oder steht in fester Verbindung zu dieser.

Das Steuerteil SB des Bürgen B steht in Verbindung zur Basisstation BS und kann Verbindung zur Geräteanordnung des Mittelsmanns M aufnehmen oder steht in fester Verbindung zu dieser.

Die Geräteanordnungen des Kontrolleurs K und des Mittelsmanns M sind für die Erfindung nicht zwingend erforderlich, ebenso wie die Zusatzeinrichtungen Z1 und Z2. Es ist auch prinzipiell unerheblich, welcher Art die Verbindungen zwischen Zahlungsgeber ZG und Zahlungsnehmer ZN und zwischen Zahlungsgeber ZG und Bürge B sind. Prinzipiell könnten die Schnittstellen vom Zahlungsgeber ZG zum Zahlungsnehmer ZN und zum Bürgen B hin physikalisch identisch sein. Sie müßten sich aber im Protokoll unterscheiden. Die Geräteanordnung des Zahlungsgebers könnte also aus einer intelligenten Karte bestehen, wobei die Verbindungen durch Einstecken in Lesegeräte herzustellen wären.

Im vorliegenden Fall ist jedoch vorgesehen, die Verbindung zum Bürgen B hin als Mobilfunkverbindung auszugestalten. Dabei genügt es, wenn auf dieser Mobilfunkverbindung ein Datenaustausch möglich ist; auch ist es nicht erforderlich, den Zahlungsgeber ZG zu lokalisieren, da die für das erfindungsgemäße Verfahren erforderlichen Verbindungen immer vom Zahlungsgeber und damit von der Mobilseite ausgehen.

Die Verbindung zwischen Zahlungsgeber ZG und Zahlungsnehmer ZN basiert im vorliegenden Beispiel auf einem Plakettensystem, das ursprünglich entwickelt wurde, um per Fernabfrage die Individuen eines zu überwachenden Tierbestands zu identifizieren. Eine Weiterentwicklung dieses Plakettensystems wird derzeit bei den europäischen Eisenbahnen zur begleitenden Überwachung von Güterwagen und Frachtcontainern eingeführt.

Die ursprünglichen Plaketten, mit denen die Tiere in irgendeiner an sich bekannten Weise markiert wurden, waren so aufgebaut, daß sie beim Empfang von HF-Energie mit einer bestimmten Frequenz die empfangene Energie nutzen, um auf derselben Frequenz ein mit der Nummer der Plakette und somit der Nummer des markierten Tiers moduliertes Signal zurückzusenden. Abfragestationen konnten an Tränken, Wildwechseln oder Eingängen zu Pferchen angebracht sein. Sie mußten einen HF-Dauerstrich-Sender und einen HF-Empfänger mit Demodulator aufweisen, womit die Plaketten abgefragt und deren Nummern ausgewertet werden konnten.

Weiterentwicklungen der Plaketten gehen in verschiedene Richtungen. Durch mit enthaltene Batterien kann die Reichweite für eine sichere Abfrage erhöht werden oder es können Zusatzfunktionen verwirklicht werden. Der Empfang von HF-Energie ist dann nur noch Auslöser für die Abfrage. Andere Weiterentwicklungen gehen dahin, auch Daten in den Plaketten von der Abfragestation aus zu ändern. Die Abfragestationen selbst sind entsprechend weiter entwickelt. Die Grundversion und einige Weiterentwicklungen sind beschrieben, beispielsweise in den US-Patenten 4,739,328, 4,864,158, 5,030,807 und 5,055,659. Die zur Verwendung bei den europäischen Eisenbahnen vorgesehenen Plaketten haben etwa das Format einer Scheckkarte und sind einige Millimeter dick. Für die vorliegende Anwendung sind Kombinationen aus Plaketten und Abfragestationen erforderlich, mittels derer in beiden Richtungen Daten ausgetauscht werden können und zwar bei Abständen im Bereich von bis zu 20 bis 30 Meter. Eine vergleichbare Lösung ist beispielsweise bekannt aus EP-A-0 577 328. Die Verbindung zur Geräteanordnung des Kontrolleurs K erfolgt auf die gleiche Art.

Die Verbindungen zwischen Zahlungsnehmer ZN und Mittelsmann M sowie zwischen Mittelsmann M und Bürgen B sind Datenverbindungen üblicher Art; auch ein Austausch von Datenträgern ist hier nicht ausgeschlossen.

Als Mittelsmann M ist hier alles zu verstehen, was der organisatorischen Abwicklung der von einer Vielzahl von Zahlungsgebern beanspruchten Dienste dient. Hier können Daten von mehreren gleichen Geräteanordnungen ein und desselben Zahlungsnehmers zusammenlaufen; hier können mehrere Zahlungsnehmer oder mehrere Bürgen oder beides zusammengefaßt sein; auch der Zahlungsverkehr zwischen Bürgen und Zahlungsgebern kann hier auf bankübliche Art abgewickelt werden.

Für das folgende werden Datensicherungsmechanismen unterstellt, wie sie z.B. bei Telefonkarten, Scheckkarten, Kreditkarten, Pay-TV-Teilnehmerkarten und ähnlichem bekannt sind.

Nachfolgend wird der für den erfindungsgemäßen Zahlungsverkehr erforderliche Datenaustausch am Beispiel der Erfassung von Straßenbenutzungsgebühren beschrieben. Die Geräteanordnung des Zahlungsgebers ZG ist in dessen Kraftfahrzeug installiert, die Geräteanordnung des Zahlungsnehmers ZN ist eine Gebührenerfassungsstelle oder Mautstelle, Bürge B ist hier der Betreiber eines Mobilfunknetzes.

Der Zahlungsgeber ZG erhält vom Bürgen B einen elektronischen Schlüssel, der den Bürgen B, nicht aber den Zahlungsgeber ZG kennzeichnet. Beim Vorbeifahren an einer Bake Bk des Zahlungsnehmers meldet sich diese Bake beim Zahlungsgeber ZG unter Nennung eines zu zahlenden Betrags oder eines Tarifs, aus dem fahrzeugseitig anhand einer Fahrzeugklasse der zu zahlende Betrag ermittelt werden kann. Der Empfang dieser Meldung wird nun vom Zahlungsgeber ZG mit dem elektronischen Schlüssel des Bürgen B an den Zahlungsnehmer ZN zurückgemeldet. Der Zahlungsnehmer ZN kann nun den geschuldeten Betrag vom Bürgen B fordern. Der Zahlungsgeber ZG meldet dem Bürgen B, in welcher Höhe er seine Bürgschaft in Anspruch genommen hat, woraufhin ihm dieser diesen Betrag in Rechnung stellt und auf übliche Weise mit ihm verrechnet.

Der Datenaustausch zwischen Zahlungsgeber ZG und Zahlungsnehmer ZN muß zwingend einzelfallbezogen sein, während zwischen Zahlungsnehmer ZN und Bürgen B und zwischen Zahlungsgeber ZG und Bürgen B die Beträge in aufsummierter Form ausgetauscht werden können.

Hier sind nun die verschiedensten zusätzlichen Sicherungsmaßnahmen möglich: Die Erfassung von Verkehrsteilnehmern, die keine Bürgschaft nachweisen und auch sonst nicht auf andere Weise bezahlen, kann auf jede herkömmliche Art, wie Schranken oder photographische Überwachung erfolgen. Weniger aufwendig und nahezu genauso erfolgreich sind stichprobenartige Überwachungen durch Kontrolleure K. Hierzu wird von der Bake Bk eine Quittung an den Zahlungsgeber zurückübermittelt, die er auf Anforderung durch einen Kontrolleur an diesen sendet.

Der Schlüssel des Bürgen kann auf einen Garantiebetrag begrenzt sein und im Steuerteil SG des Zahlungsgebers ZG automatisch gesperrt werden, wenn der an den Bürgen zu meldende Betrag sich soweit aufsummiert hat, daß der Garantiebetrag überschritten ist.

Der Schlüssel des Bürgen kann zeitlich begrenzt sein und nur nach erfolgtem Datenaustausch zwischen Zahlungsgeber ZG und Bürgen B und gegebenenfalls erst nach Begleichung der Rechnung erneuert werden.

Zwischen Zahlungsgeber und Zahlungsnehmer wie auch zwischen Zahlungsgeber und Bürgen können zusätzliche Daten ausgetauscht werden, durch die die völlige Anonymität durch eine Typisierung ersetzt wird. Dem Zahlungsnehmer wird damit z.B. ein Fahrzeugtyp, dem Bürgen z.B. eine Region genannt. Damit ist ein gewisser Datenabgleich, z.B. beim Mittelsmann M, möglich.

Die Anonymität kann auch dadurch erreicht werden, daß zwar alle relevanten Daten weitergereicht werden, dies jedoch in einer derart verschlüsselten Weise, daß der Datenabgleich nur bei einer neutralen verschwiegenen Stelle erfolgen kann und möglicherweise nur so, daß eine entschlüsselte Freigabe der Daten dann völlig ausgeschlossen ist, wenn ein Zahlungsvorgang ordnungsgemäß abgeschlossen ist.

Durch Zusatzeinrichtungen wie Z1 und Z2 können die bei den Zahlungsvorgängen durch die Baken erhaltenen Daten, insbesondere die Positions- und Zeitangaben, ergänzt und weiter benutzt werden. Beispielsweise können die aktuellen Positionen über Mobiltelefon an die Zentrale einer Spedition gemeldet werden. Durch Empfang von Verkehrsmeldungen über ein Radio-Daten-System und unter Berücksichtigung des von einer Bake genannten aktuellen Tarifs kann eine günstigere Route ausgewählt werden. Die Positionsangaben der Bake können zur Auswahl einer Karte aus einem elektronischen Kartenwerk verwendet werden. Auch eine Kombination mit dem Global Positioning System GPS ist möglich.

## Patentansprüche

1. Verfahren für einen gesicherten, anonymen Zahlungsverkehr unter Einschaltung eines Bürgen (B), der die Verbindung zwischen einem Zahlungsgeber (ZG) und einem Zahlungsnehmer (ZN) schafft, **dadurch gekennzeichnet, daß** der Zahlungsgeber (ZG) einen den Bürgen (B) und seine Bürgschaft, nicht jedoch den Zahlungsgeber kennzeichnenden elektronischen Schlüssel erhält, daß der Zahlungsgeber (ZG) die eine Zahlung betreffenden, ihm von einem Zahlungsnehmer (ZN) übermittelten Daten mit dem Schlüssel des Bürgen (B) an den Zahlungsnehmer (ZN) zurückübermittelt, womit sich der Zahlungsnehmer (ZN) gegenüber dem Bürgen (B) ausweisen und die Zahlung einfordern kann, daß der Zahlungsgeber (ZG) aus den die Zahlung betreffenden Daten die Höhe der Zahlung ausfiltert und dem Bürgen (B) zur Belastung eines beim Bürgen (B) geführten Kontos des Zahlungsgebers (ZG) weiterübermittelt.

2. Verfahren nach Anspruch 1, **dadurch gekennzeichnet, daß** der Zahlungsnehmer (ZN) nach Erhalt des Schlüssels des Bürgen (B) eine mit einem Schlüssel des Zahlungsnehmers (ZN) versehene Quittung an den Zahlungsgeber (ZG) übermittelt.

3. Verfahren nach Anspruch 1, **dadurch gekennzeichnet, daß** der Zahlungsnehmer (ZN) durch mindestens eine an einer Verkehrseinrichtung installierten Bake (Bk) mit einer im Fahrzeug des Zahlungsgebers (ZG) angebrachten, zum Datenaustausch mit einer solchen Bake geeigneten Fahrzeugeinheit (TAG) die erforderlichen Daten austauscht.

4. Verfahren nach Anspruch 3, **dadurch gekennzeichnet, daß** der Zahlungsgeber (ZG) den mit dem Bürgen (B) erforderlichen Datenaustausch über ein mit seiner Fahrzeugeinheit verbundenes Mobiltelefon (MS) abwickelt.

5. Geräteanordnung für einen gesicherten, anonymen Zahlungsverkehr unter Einschaltung eines Bürgen (B), der die Verbindung zwischen einem Zahlungsgeber(ZG) und einemZahlungsnehmer(ZN)schafft,welche eine erste Schnittstelleneinrichtung (MS) zum Datenaustausch mit dem Bürgen (B) undeinezweiteSchnittstelleneinrichtung (TAG)zumDatenaustausch mit dem Zahlungsnehmer(ZN) aufweist, in der die erste Schnittstelleneinrichtung (MS) zum Austausch elektronischer Schlüssel und die Höhe eine Zahlung betreffender elektronischer Daten ausgestattet ist und in der die zweite Schnittstelleneinrichtung (TAG) zum Austausch von eine Zahlung betreffenden elektronischen Daten ausgestattet ist, **dadurch gekennzeichnet, daß** die Geräteanordnung weiter ein Steuerteil (SG) aufweist, das zum Steuern der ersten Schnittstelleneinrichtung und der zweiten Schnittstelleneinrichtung und zum Austausch der Daten zwischen den Schnittstelleneinrichtungen ausgestattet ist, daß die erste Schnittstelleneinrichtung (MS) zumindest den für den Datenaustausch erforderlichen Teil eines Mobiltelefons enthält und daß die zweite Schnittstelleneinrichtung (TAG) eine zum Datenaustausch mit an Verkehrseinrichtungen installierten Baken (Bk) geeignete Fahrzeugplakette ist.

## Claims

1. Method for secured, anonymous payment transactions with the involvement of a guarantor (B) who provides the connection between a payer (ZG) and a payee (ZN), **characterized in that** the payer (ZG) receives an electronic key characterizing the guarantor (B) and his guarantee but not the payer, **in that** the payer (ZG) sends back to the payee (ZN) the data relating to a payment and sent to him by a payee (ZN) with the guarantor's (B) key with which the payee (ZN) can identify himself to the guarantor (B) and call in the payment, and **in that** the payer (ZG) filters out from the data relating to the payment the amount of the payment and sends it on to the guarantor for debiting an account of the payer (ZG) kept by the guarantor (B).

2. Method according to Claim 1, **characterized in that**, after receiving the guarantor's (B) key, the payee (ZN) sends the payer (ZG) a receipt provided with a payee's (ZN) key.

3. Method according to Claim 1, **characterized in that** the payee (ZN) exchanges the necessary data, by means of at least one beacon (Bk) installed on a traffic device, with a vehicle unit (TAG) mounted in the payer's (ZG) vehicle and suitable for exchanging data with such a beacon.

4. Method according to Claim 3, **characterized in that** the payer (ZG) processes the necessary exchange of data with the guarantor (B) via a mobile telephone (MS) connected to his vehicle unit.

5. Appliance system for secured, anonymous payment transactions with the involvement of a guarantor (B) who provides the connection between a payer (ZG) and a payee (ZN), which appliance system has a first interface device (MS) for exchanging data with the guarantor (B) and a second interface device (TAG) for exchanging data with the payee (ZN), in which appliance system the first interface device (MS) is equipped to exchange electronic keys and electronic data relating to the amount of a payment and in which appliance system the second interface device (TAG) is equipped to exchange electronic data relating to a payment, **characterized in that** the appliance system furthermore has a control section (SG) that is equipped to control the first interface device and the second interface device and to exchange the data between the interface devices, **in that** the first interface device (MS) comprises at least that part of a mobile telephone necessary for the data exchange and **in that** the second interface device (TAG) is a vehicle tag suitable for exchanging data with beacons (Bk) installed on traffic devices.

## Revendications

1. Procédé pour des paiements sécurisés et anonymes avec l'intervention d'une caution (P), qui crée le lien entre un émetteur de paiement (ZG) et un receveur de paiement (ZN), **caractérisé en ce que** l'émetteur de paiement (ZG) reçoit un code électronique qui caractérise la caution (B) et son cautionnement, mais pas l'émetteur de paiement, **en ce que** l'émetteur de paiement (ZG) retransmet au receveur de paiement (ZN) avec le code de la caution (B) les données qui concernent un paiement et lui ont été transmises par un émetteur de paiement (ZN), ce qui fait que le receveur de paiement (ZN) peut décliner son identité vis-à-vis de la caution (B) et demander le paiement, **en ce que** l'émetteur de paiement (ZG) filtre le montant du paiement à partir des données concernant le paiement et le transmet à la caution (B) pour le débit d'un compte, géré chez la caution (B), du receveur de paiement (ZG).

2. Procédé selon la revendication 1, **caractérisé en ce que** l'émetteur de paiement (ZN) transmet après la réception du code de la caution (B) un accusé de réception, accompagné d'un code du receveur de paiement (ZN) à l'émetteur de paiement (ZG).

3. Procédé selon la revendication 1, **caractérisé en ce que** le receveur de paiement (ZN) échange les donnés nécessaires par au moins une balise (Bk) installée sur un équipement de circulation avec un appareil automobile (TAG) disposé dans le véhicule du receveur de paiement (ZG) et approprié pour l'échange de données avec une telle balise, qui échange les données nécessaires.

4. Procédé selon la revendication 3, **caractérisé en ce que** l'émetteur de paiement (ZG) effectue l'échange de données nécessaire avec la caution (B) par l'intermédiaire d'un téléphone mobile (MS) relié à son appareil automobile.

5. Agencement d'appareils pour des paiements sécurisés et anonymes avec l'intervention d'une caution (B), qui établit le lien entre un émetteur de paiement (ZG) et un receveur de paiement (ZN), qui présente un premier dispositif d'interface (MS) pour l'échange de données avec la caution (B) et un deuxième dispositif d'interface (TAG) pour l'échange de données avec le receveur de paiement (ZN), dans lequel le premier dispositif d'interface (MS) est équipé pour l'échange de codes électroniques et de données électroniques concernant le montant d'un paiement et dans lequel le deuxième dispositif d'interface (TAG) est équipé pour l'échange de données électroniques concernant un paiement, **caractérisé en ce que** l'agencement d'appareils présente également une partie de commande (SG), qui est équipée pour la commande du premier dispositif d'interface et du deuxième dispositif d'interface et pour l'échange des données entre les dispositifs d'interface, **en ce que** le premier dispositif d'interface (MS) contient au moins la partie d'un téléphone mobile nécessaire pour l'échange de données et **en ce que** le deuxième dispositif d'interface (TAG) est une plaquette de véhicule appropriée pour l'échange de données avec des balises (Bk) installées sur des équipements de circulation.
